Europäisches Patentamt

European Patent Office

Office européen des brevets

(11) Veröffentlichungsnummer: **0 256 404**
A2

# (12) EUROPÄISCHE PATENTANMELDUNG

(21) Anmeldenummer: **87111151.4**

(51) Int. Cl.⁴: **F16J 3/04**

(22) Anmeldetag: **01.08.87**

(30) Priorität: **09.08.86 DE 3627032**

(43) Veröffentlichungstag der Anmeldung:
**24.02.88 Patentblatt 88/08**

(84) Benannte Vertragsstaaten:
**DE ES FR GB IT SE**

(71) Anmelder: **BAYERISCHE MOTOREN WERKE
Aktiengesellschaft
Postfach 40 02 40 Petuelring 130 - AJ-30
D-8000 München 40(DE)**

(72) Erfinder: **Rother, Hubert
Riesenfeldstrasse 104
D-8000 München 40(DE)**
Erfinder: **Schmidt-Troje, Dieter
Ettalstrasse 42 a
D-8000 München 70(DE)**

(74) Vertreter: **Bücken, Helmut
Bayerische Motoren Werke
Aktiengesellschaft Postfach 40 02 40
Petuelring 130 - AJ-30
D-8000 München 40(DE)**

(54) **Faltenbag.**

(57) An einem Faltenbalg zur Führung eines insbesondere gasförmigen Mediums sind die Balginnenwellen mit einem elastischen Schaummaterial ausgefüllt. Der Strömungswiderstand wird dadurch deutlich herabgesetzt, ohne daß die Elastizität und Beweglichkeit des Faltenbalgs wesentlich eingeschränkt wird.

EP 0 256 404 A2

# Faltenbalg

Die Erfindung bezieht sich auf einen Faltenbalg der im Oberbegriff des ersten Anspruchs angegebenen Art.

Derartige Faltenbälge, insbesondere aus Kunststoff oder Gummi, werden beispielsweise im Automobilbau in das Luftansaugystem der Verbrennungsmotoren eingebaut, um Relativbewegungen zwischen dem Verbrennungsmotor und einem meist karosseriefestem Luftfiltergehäuse aufzunehmen, oder um Fertigungstoleranzen zu überbrücken.

Insbesondere an Hochleistungsmotoren oder im Vollastbetrieb des Verbrennungsmotors, also stets dann, wenn eine hohe Luftdurchsatzrate durch den Faltenbalg gegeben ist, wird die Luftströmung durch die Balginnenwellen erheblich gestört, und somit ein leistungsmindernder bzw. den Verbrauch des Verbrennungsmotors steigernder Strömungswiderstand erzeugt. Die sich an Balgwellen bildenden Wirbel bedingen eine Wandablösung der sonst beispielsweise in glatten Rohren geführten Strömung. Auch in Bereichen, in welchen die Strömung durch den Faltenbalg gezielt umgelenkt wird, wirken sich die Balginnenwellen äußerst negativ aus.

Eine Abhilfemaßnahme hierzu wird in der DE-PS 29 48 065 vorgeschlagen.

Dabei sind die Balginnenwellen in Strömungsrichtung zur Balgachse hin gleichsinnig konisch geneigt. Zwar wird damit die Intensität der Strömungsverwirbelung an den Balginnenwellen deutlich herabgesetzt, eine Wandablösung der Luftströmung wird dadurch jedoch nicht verhindert.

Aufgabe der vorliegenden Erfindung ist es daher, einen Faltenbalg bereitzustellen, welcher bei nahezu uneingeschränkter Aufrechterhaltung der Elastizität und Beweglichkeit des Faltenbalges eine ungestörte Durchströmung mit einem insbesondere gasförmigen Medium gewährleistet.

Diese Aufgabe wird durch das kennzeichnende Merkmal des ersten Anspruchs gelöst.
Werden die Balginnenwellen mit einem elastischen Schaummaterial ausgefüllt, so ist auf einfachste Weise eine Möglichkeit für eine störungsfreie Strömung sichergestellt. Die Elastizität und Weichheit des Schaummaterials erlaubt dem Faltenbalg dabei weiterhin, die geforderten Bewegungen auszuführen. Vorteilhafterweise wird zugleich eine wirkungsvolle Geräuschdämpfung erzielt.

Bildet zudem, wie Anspruch 2 beschreibt, das Schaummaterial eine glatte, porenfreie Oberfläche, so wird eine Strömungsführung ermöglicht, die der von glatten Rohren vergleichbar ist. Vorzugsweise kann hierzu ein Polyurethan-Schaum verwendet werden.

Anspruch 3 behandelt eine hilfreiche Ausgestaltung des Faltenbalges so, daß das eingefügte Schaummaterial unlösbar mit dem Faltenbalg verbunden wird. Umlaufende Nuten, welche mit dem Schaummaterial ausgefüllt werden bzw. umlaufende Nasen, welche vom Schaummaterial umgeben sind, stellen eine feste Verbindung von Schaummaterial und Faltenbalg sicher.

Im folgenden wird die Erfindung anhand der dargestellten Ausführungsbeispiele näher beschrieben. Es zeigt:

Fig. 1 einen Schnitt durch einen geraden erfindungsgemäßen Faltenbalg,

Fig. 2 die Einzelheit Z des Faltenbalgs aus Fig. 1,

Fig. 3 einen Schnitt durch einen weiteren als Diffusor ausgebildeten Faltenbalg,

Fig. 4 einen Schnitt durch einen weiteren bogenförmig ausgebildeten Faltenbalg.

Ein in seiner Gesamtheit mit 1 bezeichneter Faltenbalg weist mehrere konzentrisch um die Balgachse und hintereinander angeordnete Balgwellen 2 auf, die aus Balginnenwellen 3 und Balgaußenwellen 4 und diese verbindenden Flanken 5 und 6 bestehen. Die innerhalb des Faltenbalges 1 befindlichen ringförmigen Räume zwischen den Flanken 5 und 6 sind mit Schaummaterial 7 ausgefüllt, welches auch die Balginnenwellen 3 umgibt und bündig an die Innenkanten der nicht mit Balgwellen versehenen Faltenbalgbereiche 8 und 9 anschließt.

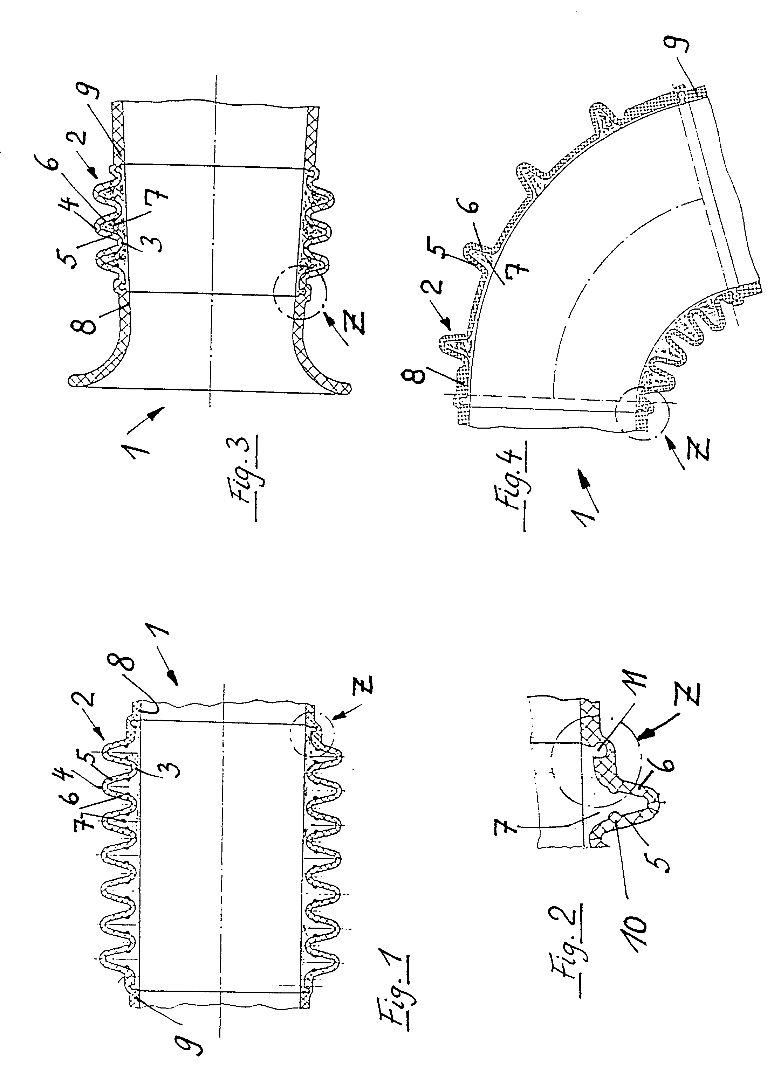

Um ein Loslösen des Schaummaterial 7 vom Faltenbalg 1 zu verhindern, sind die Flanken 5 und 6 innerhalb des Faltenbalges mit umlaufenden Nasen 10 versehen, welche in Fig. 2 nochmals vergrößert dargestellt sind. Am Übergang zu den Faltenbalgbereichen 8 und 9 sind zudem umlaufende Nuten 11 vorgesehen, welche ebenfalls mit Schaummaterial ausgefüllt sind (vergrößert in Fig. 2).

Fig. 3 zeigt einen als Diffusor ausgebildeten Faltenbalg. Hier ist ein Ausschäumen der Balgwellen besonders vorteilhaft, denn nur mit einer glatten Oberfläche kann die gewünschte Diffusorwirkung sicher erzielt werden.

An dem in Fig. 4 dargestellten bogenförmigen Faltenbalg 1 ist speziell im Bogenaußenbereich ein Ausschäumen der Balginnenwellen besonders vorteilhaft, da nur eine glatte Wand eine strömungsgünstige Umlenkung ermöglicht.

**Ansprüche**

1. Schlauchartiger Faltenbalg zur Strömungsführung, insbesondere gasförmiger Medien, mit Balgwellen, dadurch gekennzeichnet, daß die Räume zwischen den Balginnenwellen mit elastischem Schaummaterial ausgefüllt sind.

2. Faltenbalg nach Anspruch 1, dadurch gekennzeichnet, daß das Schaummaterial in gehärtetem Zustand eine glatte, porenfreie Oberfläche bildet.

3. Faltenbalg nach Anspruch 1 oder 2, dadurch gekennzeichnet, daß die Innenwände des nicht ausgeschäumten Faltenbalges mit umlaufenden Nuten (11) und/oder Nasen (10) versehen sind.

Fig. 1

Fig. 2

Fig. 3

Fig. 4

0 256 404